# EUROPEAN PATENT SPECIFICATION

(11) **EP 2 380 468 B1**
(45) Date of publication and mention of the grant of the patent: **05.09.2018**
(21) Application number: 11171787.2
(22) Date of filing: 17.07.2007
(51) Int. Cl.: A47J 27/21, H01R 13/52

(54) **Cordless electrical connector**
Schnurloser Elektrischer Verbinder
Connecteur Électrique Sans Fil

(30) Priority: 26.07.2006 GB 0614864; 21.12.2006 GB 0625675; 22.05.2007 GB 0709836
(43) Date of publication of application: 26.10.2011
(62) Divisional of application: 07766271.6
(73) Proprietor: Otter Controls Limited, Buxton Derbyshire SK17 7LF (GB)
(72) Inventor: Whiteley, Simon, Buxton, Derbyshire SK17 7LF (GB)
(74) Representative: Cross, James Peter Archibald

(56) References cited:
- WO-A1-2006/050900
- GB-A- 2 320 672
- GB-A- 2 368 980
- GB-A- 2 369 037
- US-A- 6 149 456
- US-A1- 2003 232 515

## Description

### Field of the Invention

The present invention relates to a cordless electrical connector, and particularly, although not exclusively, to a cordless electrical connector for use with domestic appliances.

### Background of the Invention

In a cordless kettle, a water reservoir includes a cordless connector that is operable to cooperate with a corresponding connector on a power base. Thus, when the water reservoir is mounted on the power base, power may be supplied to a heating element located in the kettle jug to allow water therein to be heated.

Such arrangements allow a power base to be connected to a domestic power supply (such as by a plug), whilst further allowing the kettle jug to be removed from the base after the water is heated to allow a user to more easily dispense the water as required.

Further advances on cordless connectors have led to 360° connectors, as described for example in WO 94/06185.

The above types of cordless electrical connectors have also found use on other domestic appliances, such as food processors, blenders and the like. This arrangement provides an advantage that the processed/blended food can be more easily dispensed by a user.

However, as will be appreciated, appliances such as food processors, blenders and, to a lesser extent kettle jugs, need regular cleaning. In particular, cordless appliances for containing food or liquids other than water require cleaning after each use. Such a task is time consuming and may be difficult to perform manually.

Accordingly, it is desirable to provide a cordless connector that facilitates cleaning of an appliance. In particular, it would be desirable to provide a cordless appliance where the detachable part of the appliance can be washed in a dishwasher, by immersion in water or otherwise easily cleaned.

GB-A-2369037 discloses a domestic appliance having a clamping plate welded to a vessel base to form a watertight seal around a heater compartment. The clamping plate retains a cordless connector by inter-engagement with a flange provided on the outer wall of the connector.

WO 2006/050900A1 discloses a domestic electrical appliance proper having a base component having a discrete 360° cordless connector.

### Statements of the Invention

According to the present invention there is provided a domestic electrical appliance proper according to claim 1.

Preferably the electrical connector comprises sealing means in which the current carrying components of the electrical connector are at least partially embedded. Alternatively, the appliance may comprise a fixed seal into which the electrical connector is fitted so as to cover the current carrying components of the connector. Alternatively, where the connector is formed by a moulding process, the current carrying components of the connector may be embedded in the connector during moulding.

A seal may be disposed between the appliance and the electrical connector. The seal may be a gasket seal mounted on a flange portion of the electrical connector. In a further preferred embodiment the electrical connector may be attached to the appliance using the Easyfix® method, as disclosed in GB-A-2330064.

However, in other preferred arrangements the seal may be retained by the appliance, and, on fitting of the connector, the electrical connector being urged against the seal. In further embodiments the seal may be made integral with either the appliance or the connector.

The seal between the appliance and the connector may be formed at either end of the connector.

It is particularly preferred that the appliance comprises a residual current protector. Such an arrangement is particularly preferred as it offers protection to a user against electric shock should the appliance become damaged. The residual current protector may be located in the appliance proper or within a power base associated therewith.

The electrical socket connector may further comprise a plug operable to fit within the connector, or to cover the connector. It is preferred that the plug is operable to prevent water gathering within the connector during a washing procedure.

As will be appreciated, the above described arrangements overcome problems associated with the prior art by allowing an appliance comprising a cordless electrical connection to be easily cleaned, for example by putting the appliance in a dish washer.

### Brief Description of the Drawings

In order that the present invention be more readily understood, specific embodiments thereof will now be described with reference to the accompanying drawings, a brief synopsis of which is set out below.
Figures 1a to 1e are different views of a first cordless electrical connector.
Figures 2a to 2e are different views of a second cordless electrical connector.
Figure 3 shows an example of a modified connector.
Figure 4 shows the example of figure 3, with the pieces thereof exploded out.
Figure 5 shows a variant of the example of figure 3, in an embodiment of the invention.
Figure 6 shows the embodiment of figure 5, with the pieces thereof exploded out.
Figure 7 shows the example of figure 3 located within an appliance.
Figure 8a is an exploded view of a further example which is not an embodiment of the invention but which is useful for understanding the invention.
Figure 8b is a detail view of the example of Figure 8a, when assembled.
Figure 9a is a perspective view of a further example which is not an embodiment of the invention but which is useful for understanding the invention.
Figure 9b is a plan view of the example of Figure 9a.
Figure 9c is a cross-sectional view in the plane A-A of Figure 9b.
Figure 10a is a perspective view of a further example which is not an embodiment of the invention but which is useful for understanding the invention.
Figure 10b is a plan view of the example of Figure 10a.
Figure 10c is a cross-sectional view in the plane A-A of Figure 10b.

### Detailed Description of Embodiments

The first example is described in relation to a modified version of the applicant's CS4(CS7)/CP7 360° cordless electrical connector. Particulars of this connector can be found in WO-A-94/06185.

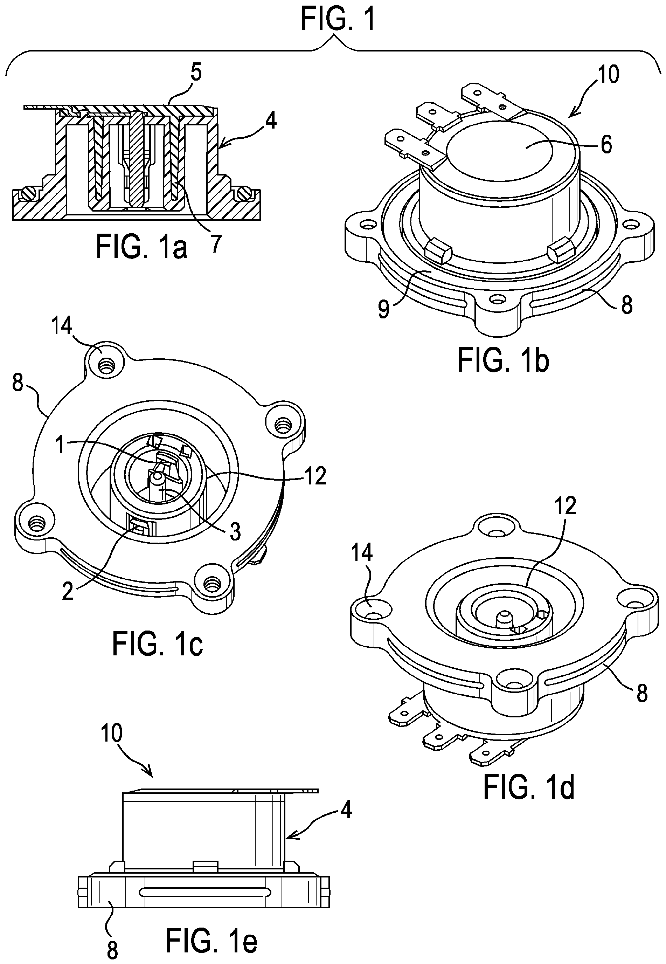

Figures 1a to 1e show an example of the CP7 connector that, in use, is fitted to an electrical appliance, such as a kettle jug or food processor. The corresponding CS7 connector is fitted to a power base. Power may then be supplied to the electrical appliance by mounting the appliance onto the power base.

The main body 4 of the electrical connector 10 comprises an upper end 5, and a lower end defined by an aperture into which the corresponding CS7 electrical connector may fit. Figure 1c shows the electrical connectors: an earth pin 3 is formed in the centre of the aperture; an inner ring member 12 is formed in the aperture; a live connector 1 is formed on the inner surface of the inner member 12, and the neutral connector 2 is formed on the outer surface of the inner ring member 12.

It will be appreciated that more or fewer connectors could be provided. For example, in some arrangements the controls for the appliance may be housed in the power base, with sensors or other components being housed in the appliance proper. In these arrangements it may be necessary to provide additional contacts in the connector system to allow control or other signals to be passed between the appliance proper and the power base control system. Particulars of such a control arrangement may be found in GB-A-2228634.

The main body 4 of the electrical connector includes a flange 8 that is formed about the aperture at the lower end. The flange 8 comprises means 14 to allow the connector 10 to be securely fitted to an appliance, for example a series of holes through which screws may be placed. The flange 8 is operable to retain a gasket seal 9. In preferred embodiments the gasket seal takes the form of an o-ring. The gasket seal 9 is mounted on the side of the flange 8 remote from the aperture.

The top surface of the electrical connector 10 is enclosed by a cover 6. The cover is preferably an elastomer cover which seals the top surface, and also fills the cavities 7 that are present in a standard CP7 connector. The cover 6 is moulded onto the top of the component and embeds the current carrying parts at the upper end of the connector 10.

Alternatively the cover 6 may be insert moulded into the main body 4 of the connector 10. Thus, whilst the main body 4 is formed, and is still in a molten state, the current carrying components are embedded therein, and hence sealed. The cover 6 may be formed as an integral part of the main body 4.

An appliance to which the connector 10 is to be fitted is formed with a recess into which the connector 10 can be secured. The gasket seal 9 is thereby pressed between the appliance and the flange 8 to provide a watertight seal.

In a preferred arrangement the main body 4 may incorporate one or more drainage holes. Typically, when an appliance is washed in a dishwasher it is placed therein upside down. Accordingly, the connector 10 may fill with water during the washing process. The incorporation of drainage holes allows water that would otherwise be collected in the connector 10 to drain away.

The above described arrangement provides for the appliance, such as a food processor or kettle jug, to be placed into a dish washer for cleaning. The elastomer cover 6 and the gasket seal 9 provide for a water-proof integration of the connector with the appliance. The design of the present arrangement allows for large creepage distances, combined with good drainage of any residual water.

It will be appreciated that the above described electrical connector may be used in many different domestic appliances. Examples include food processors, blenders, kettles, coffee and espresso makers, juicers, smoothie makers, pans, sauce makers, steamers and milk frothers. It will be appreciated that the above list is not exhaustive.

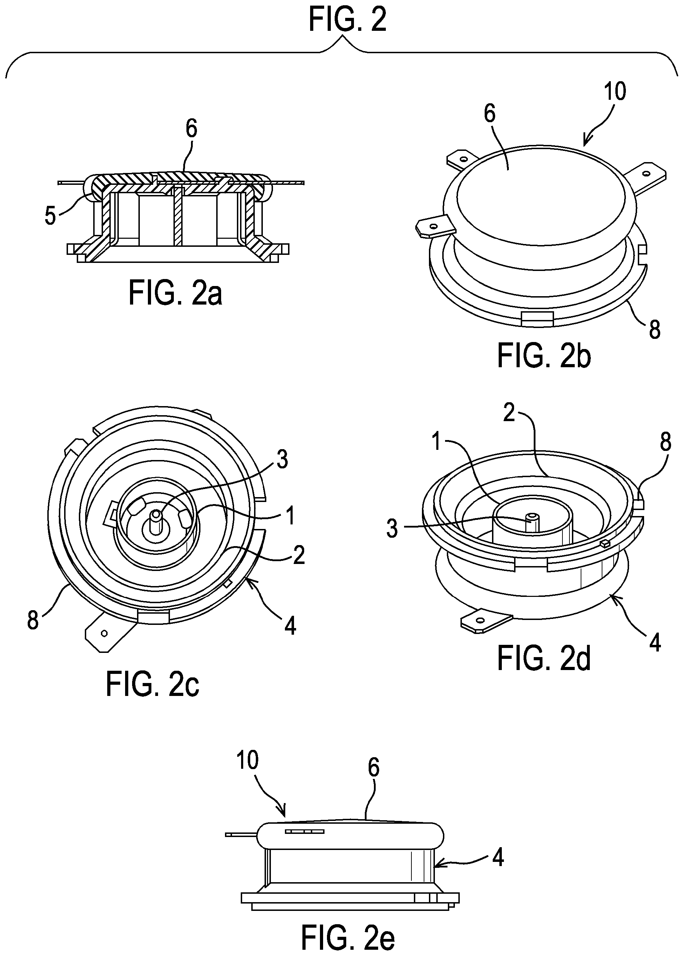

Figures 2a to 2e show a second arrangement of an electrical connector. This arrangement comprises a seal 6 provided at the upper end of the main body 4. This seal 6 is preferably an elastomer. A flange 8 is also preferably formed circumferentially about the lower end of the main body 4. The flange 8 is able to retain a gasket seal 9.

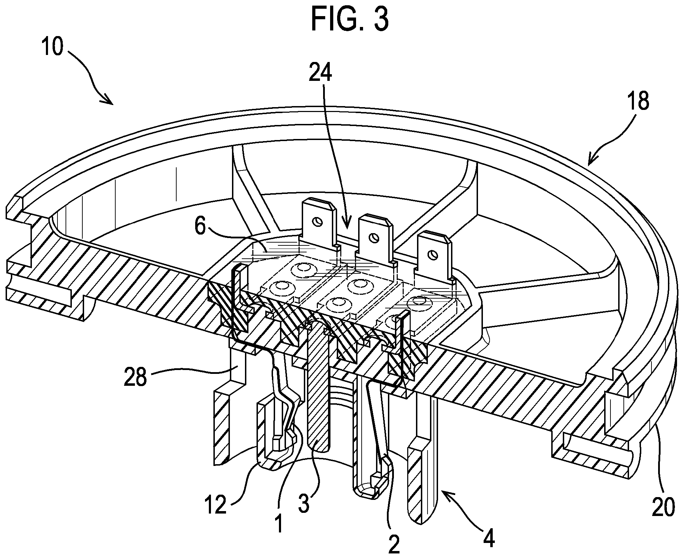

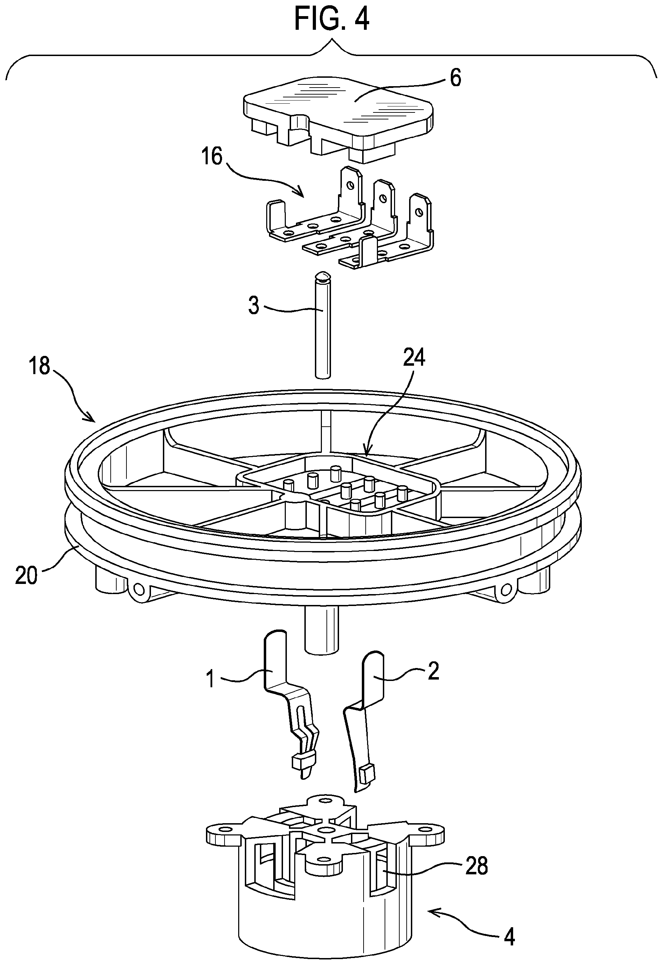

Figures 3 and 4 show a further modified version of a CP7 connector. The electrical connector 10 comprises a main body 4, with an upper end 5 and a lower end. The connector 10 further comprises an inner member 12. The lower end includes an aperture operable to cooperate with a power base connector, such as a CS7 power base connector. The upper end 5 includes a plurality of apertures through which the earth pin 3, and the live and neutral connectors 1, 2 protrude. The live and neutral connectors may be moving or static contacts.

The main body 4 of the connector 10 cooperatively fits with a member 18. Member 18 comprises an outer rim 20 operable to retain a seal and a central portion 24.

The central portion 24 houses the current carrying components 16 of the connector 10. Preferably the member 18 is moulded from plastic and the housing is formed in the moulding process: typically the housing may be a recessed area, or a section defined by a rim. However, it is also envisaged that it may be an area located on the member 18. The central portion 24 further comprises a plurality of apertures through which the earth pin 3 and the live and neutral connectors 2, 3 protrude. Accordingly, the current carrying components 16 are housed on the member 18 and the connector pins protrude through the member 18 and the main body 4, so as to be able to cooperate with corresponding connectors in the power base.

The central portion 24 of the member 18 is covered by a cover 6, which is preferably an elastomer cover.

In use, the member 18 is fitted to the bottom section of an appliance, and a seal, which is preferably a gasket seal, is pressed between the outer rim 20 of the member 18 and the appliance. The rim may releasably retain an o-ring, or a seal may be fixed thereto.

The main body 4 comprises one or more drainage apertures 28. Preferably these are located adjacent the upper end 5 of the connector 10, so that when the appliance is turned upside down, the drainage apertures 28 will be at the bottom of the main body 4, and hence aid drainage.

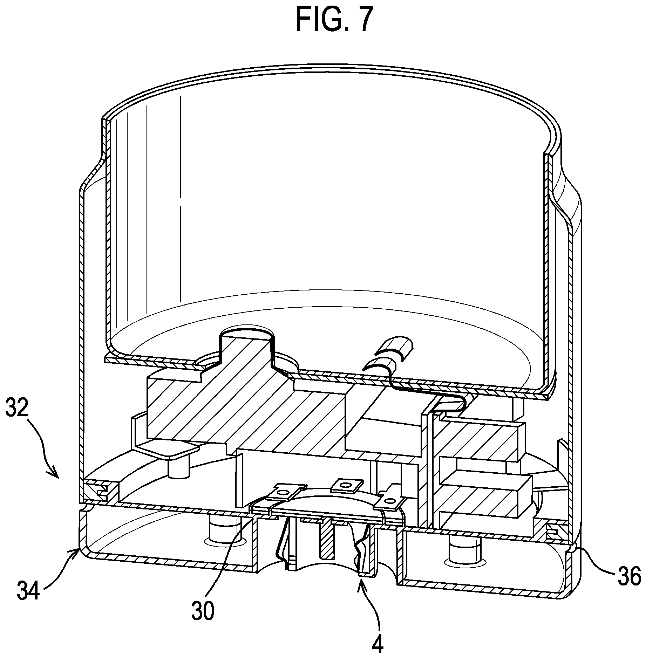

Referring to figure 7, the member 18 retains a seal, such as an o-ring, against an inner wall 30 of a bottom section 32 of an appliance. The combination of the elastomer cover 6, and the seal between member 18 and the appliance serves to water-proof the appliance, preferably so that the appliance is washable in a dishwasher.

The appliance further comprises a sub-base 34, such that the bottom surface of the main body 4 of the connector 10 is flush with the bottom of the appliance. The sub-base 34 comprises one or more drainage holes or apertures 36.

In use, water that collects in the connector 10 is able to drain through the drain apertures 28 in the main body 4, and out of the appliance through the apertures 36 in the sub-base 34.

The current carrying components 16 may be insert moulded into the member 18, rather than being sealed by a cover 6. Both arrangements are equally preferred.

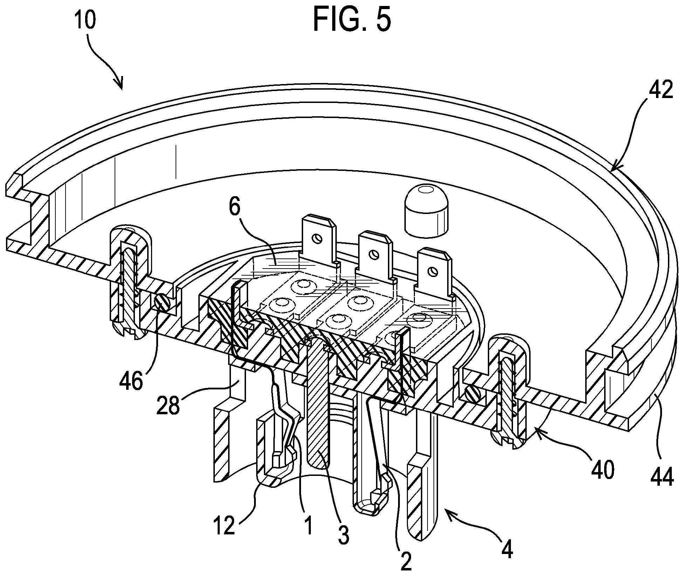

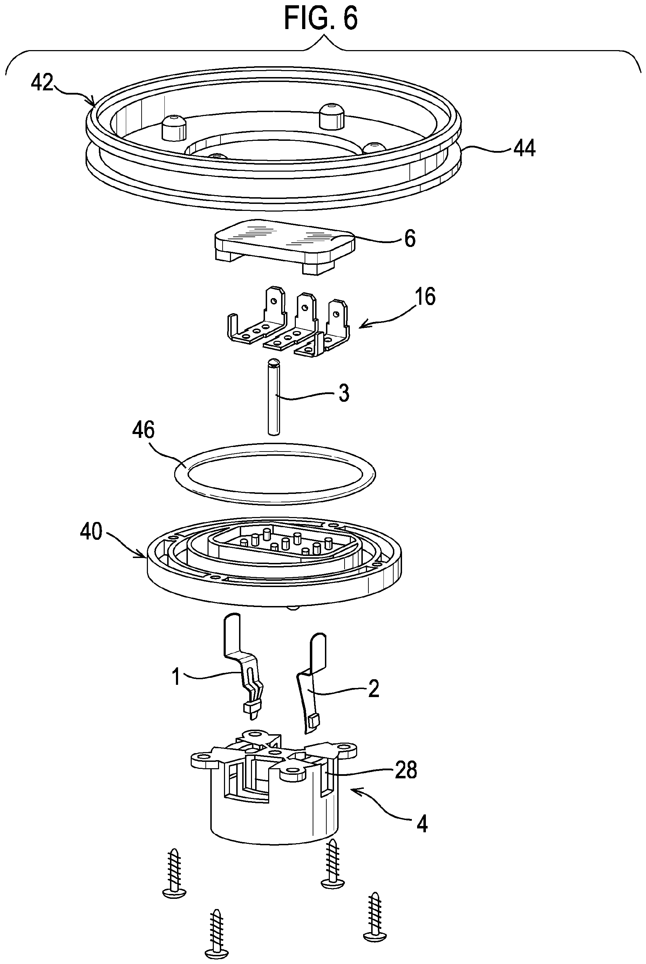

Figures 5 and 6 show an embodiment of the present invention that is based upon the example shown in Figures 3 and 4. In this embodiment member 18 has been replaced with two members: inner member 40 and outer member 42. In the drawings, the two members 40, 42 are shown screwed together. However, it will be appreciated that any water-proof fixing method may be used.

The inner member 40 comprises a central portion 24 that houses the current carrying components 16 of the appliance in a similar way as described in relation to the second embodiment. The outer member 42 comprises an outer rim 44 that is operable to retain a seal and engage with an appliance to form a water-proof seal therebetween.

A further seal 46 is disposed between the inner member 40 and the outer member 42. This seal is preferably a gasket seal. It is also preferred that the seal is retained within a channel in the inner member. However, it will be appreciated that any retaining means would suffice.

In the example of Figures 3 and 4, and the embodiment of Figures 5 and 6, it can be seen that the central portion 24 is subdivided into sections for each of the current carrying portions, by an arrangement of low walls. These sections may alternatively be formed as discrete partitions, as will be described below.

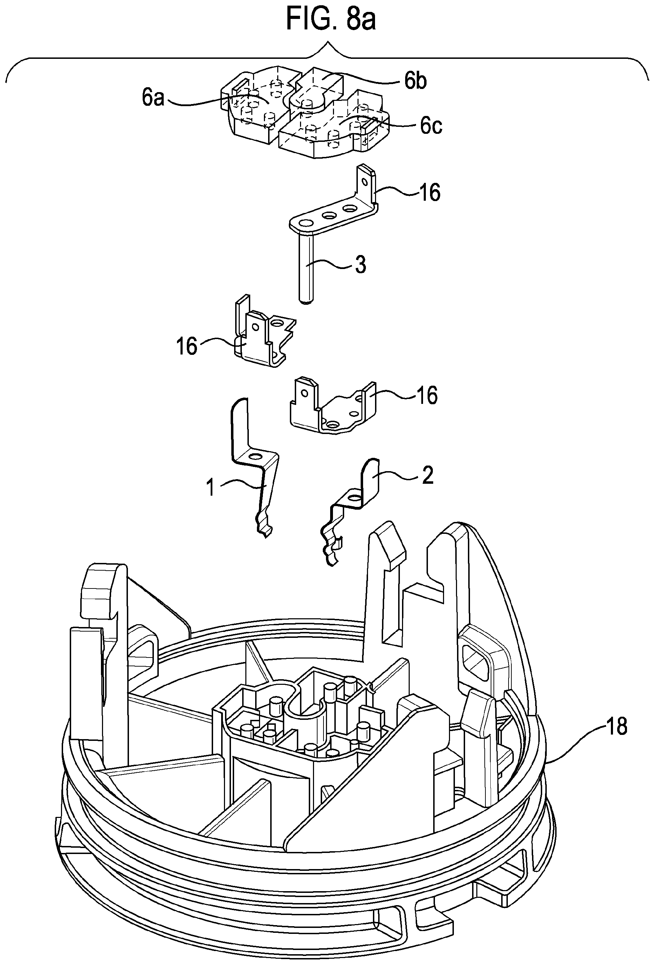

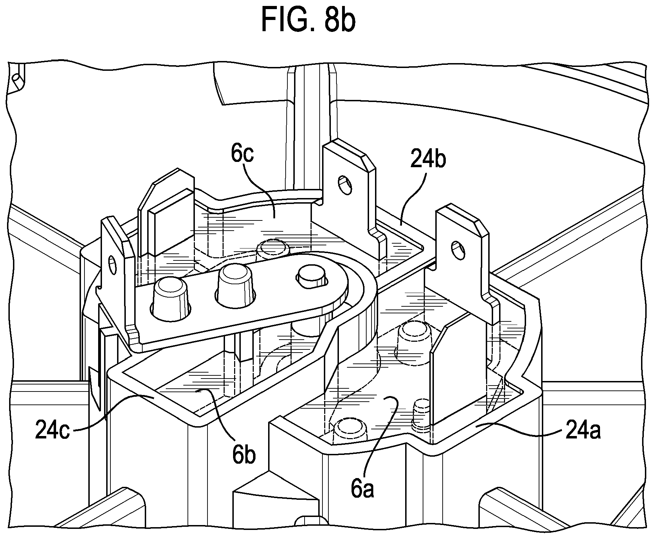

Figures 8a and 8b show a further example that is similar to the example of Figures 3 and 4 and the embodiment of Figures 5 and 6. However, in this example each of the current carrying portions 16 in the top surface of the electrical connector 10 is enclosed in a discrete partition 24a, 24b, 24c within the central portion 24 of the member 18, and the seal 6 comprises corresponding discrete seals 6a, 6b, 6c which fit within the corresponding partitions 24a, 24b, 24c. Hence, the live, neutral and earth connectors are separately sealed, so that the risk of a short-circuit between connectors is reduced if one or more of the seals leaks, or breaks down.

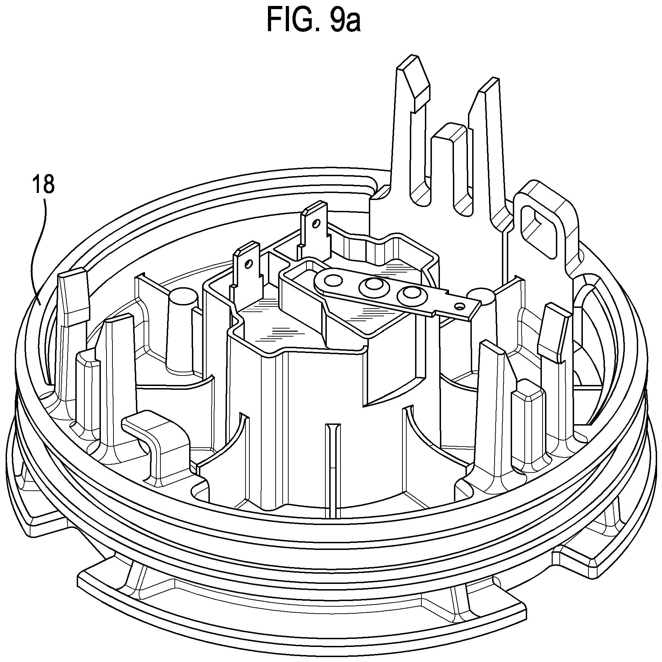

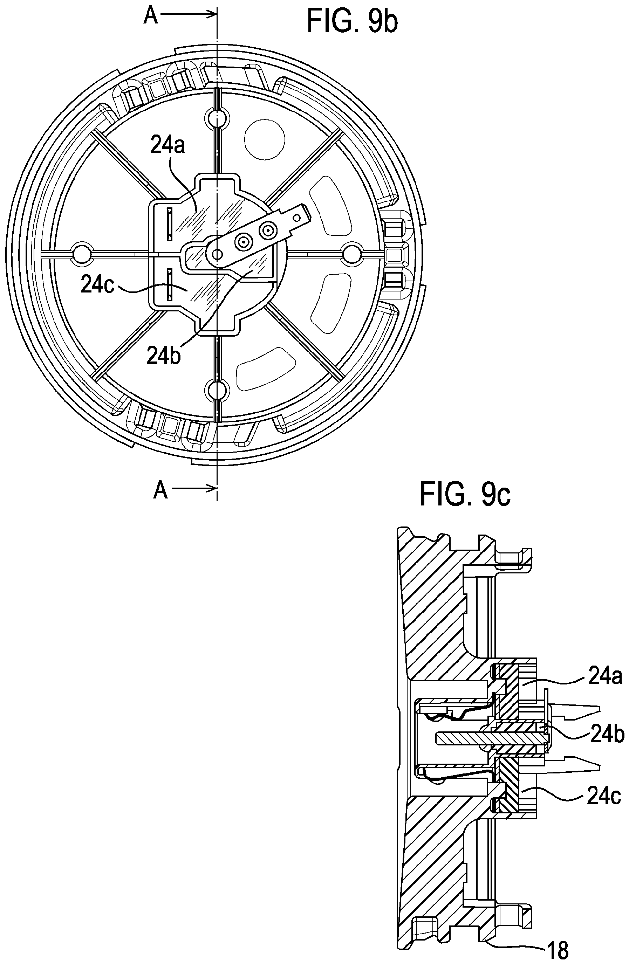

Figures 9a to 9c show a similar example to that of Figures 8a and 8b; Figure 9c shows clearly in cross-section the separation of the central portion 24 into discrete partitions each containing a discrete seal 6a, 6b, 6c.

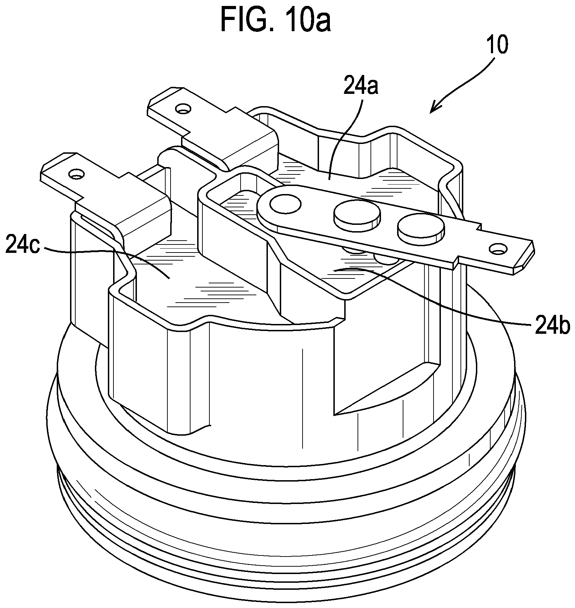

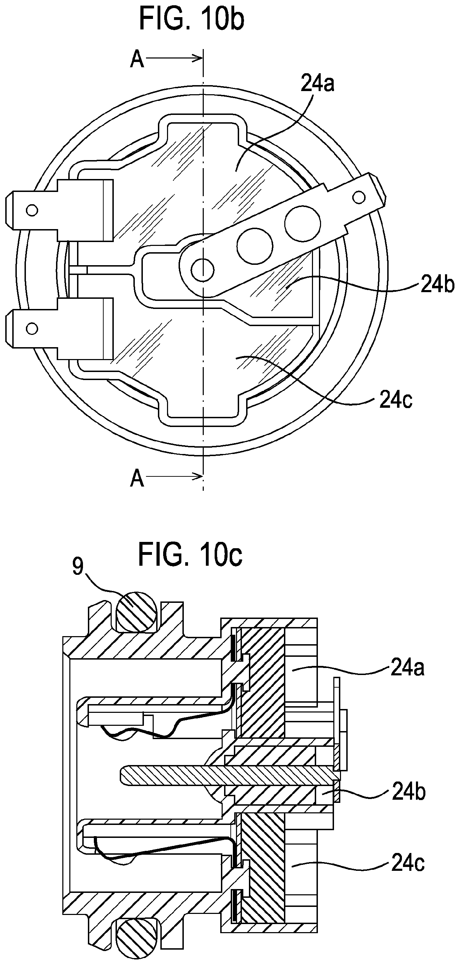

Figures 10a to 10c show a discrete connector similar to that of Figures 1 and 2, but with discrete partitions 24a, 24b, 24c and discrete seals 6a, 6b and 6c similar to those of the examples of Figures 8a and 8b and Figures 9a to 9c. Additionally, the gasket seal 9 is arranged to seal laterally against the appliance, rather than upwardly as in the embodiment of Figure 1.

In any of the examples of Figures 8 to 10, the discrete seals 6a, 6b and 6c may be formed before assembly, or alternatively by pouring a sealant in liquid form into the discrete partitions 24a to 24c and setting the sealant within the discrete partitions.

It is preferred that there is provided a plug operable to cooperate with a portion of the cordless electrical connector. The plug preferably fits within the aperture of the connector 10 to prevent water collecting therein during washing. The plug may be connected to the appliance. However, it is equally preferred that the plug is provided as a separate integer. As an alternative to the plug, there may be provided other means to close the aperture of the electrical connector, such as a sliding cover.

It is also preferred that a residual current protector is provided in either the appliance or the corresponding power base.

The electrical connection pins 1, 2 and 3 may be coated with an electrically conductive, relatively inert material, such as gold or silver plate, so as to reduced or overcome potential corrosion and/or galvanic reaction problems.

It will be appreciated that the above specific embodiments are described by way of reference only, and that many modifications and variations are possible within the scope of the enclosed claims.

## Claims

1. A domestic electrical appliance proper having a base component (18; 42) having a discrete 360° waterproof cordless connector (10) sealed thereto, wherein the base component is sealed against an inner side wall (30) of a bottom section (32) of the appliance proper so as to waterproof the appliance proper.

2. The appliance proper of claim 1, wherein the base component (18; 42) comprises drainage means.

3. The appliance proper of any preceding claim, wherein the discrete waterproof cordless electrical connector (10) includes means to allow water that would otherwise be retained within said cordless connector to drain away.

4. The appliance proper of any preceding claim, wherein the base component (18; 42) includes an outer rim (20) retaining a seal for sealing against the inner side wall (30).

5. The appliance proper of any preceding claim, wherein a bottom surface of the connector (10) is flush with the bottom of the appliance proper.

6. The appliance proper of any preceding claim, further comprising a residual current protector and/or a sensor.

7. The appliance proper of any preceding claim, including means to cover, fit within or fill the electrical connector (10) to inhibit the ingress of water during washing.

8. The appliance proper of any preceding claim, wherein the connector (10) comprises a plurality of current carrying components (1, 2, 3) for supplying power to the appliance proper, each of said current carrying components (1, 2, 3) being sealed or embedded into the connector (10).

9. The appliance proper of claim 8, wherein each of said current-carrying components (1, 2, 3) is at least partially embedded in a sealant (6).

10. The appliance proper of claim 8 or 9, wherein the current carrying components (1, 2, 3) are sealed into the electrical connector (10) by insert moulding.

11. The appliance proper according to any one of claims 8 to 10, including a cover (6) to seal the current carrying components (1, 2, 3) of the electrical connector (10).

12. The connector according to any one of claims 9 to 11, wherein the sealant (6) or cover (6) is an elastomer material moulded onto the top of the electrical connector (10).

13. The appliance proper of any preceding claim, wherein the appliance proper is a cordless appliance detachable from a power base, wherein at least one control for the cordless appliance is housed in the power base.

14. The appliance proper of any preceding claim, comprising one of: a food processor, a blender, a kettle, a coffee maker, an espresso maker, a juicer, a smoothie maker, a pan, a sauce maker, a steamer and a milk frother.

## Patentansprüche

1. Elektrisches Haushaltsgerät an sich mit einer Grundkomponente (18; 42) mit einem separaten wasserdichten, schnurlosen 360°-Anschluss (10), der dazu abgedichtet ist, wobei die Grundkomponente gegen eine Innenseitenwand (30) eines Bodenabschnitts (32) des Geräts an sich abgedichtet ist, um das Gerät an sich wasserdicht zu machen.

2. Gerät an sich nach Anspruch 1, wobei die Grundkomponente (18; 42) Entwässerungsmittel umfasst.

3. Gerät an sich nach einem vorherigen Anspruch, wobei der separate wasserdichte, schnurlose elektrische Anschluss (10) Mittel enthält, um zu ermöglichen, dass Wasser, das sonst in dem schnurlosen Anschluss zurückgehalten würde, abgelassen wird.

4. Gerät an sich nach einem vorherigen Anspruch, wobei die Grundkomponente (18; 42) einen Außenrand enthält (20), der eine Dichtung zurückhält, um gegen die Innenseitenwand (30) abzudichten.

5. Gerät an sich nach einem vorherigen Anspruch, wobei eine Bodenfläche des Anschlusses (10) bündig mit dem Boden des Geräts an sich ist.

6. Gerät an sich nach einem vorherigen Anspruch, ferner umfassend einen Fehlerstromschutz und/oder einen Sensor.

7. Gerät an sich nach einem vorherigen Anspruch, einschließlich Mittel, um den elektrischen Anschluss (10) abzudecken, um in diesen zu passen oder diesen zu füllen, um den Eintritt von Wasser während eines Waschens zu verhindern.

8. Gerät an sich nach einem vorherigen Anspruch, wobei der Anschluss (10) eine Vielzahl von stromführenden Komponenten (1, 2, 3) zum Zuführen von Strom zu dem Gerät an sich umfasst, wobei jede der stromführenden Komponenten (1, 2, 3) in dem Anschluss (10) abgedichtet oder darin eingebettet ist.

9. Gerät an sich nach Anspruch 8, wobei jede der stromführenden Komponenten (1, 2, 3) mindestens teilweise in ein Dichtmittel (6) eingebettet ist.

10. Gerät an sich nach Anspruch 8 oder 9, wobei die stromführenden Komponenten (1, 2, 3) in dem elektrischen Anschluss (10) durch Umspritzen abgedichtet sind.

11. Gerät an sich nach einem der Ansprüche 8 bis 10, einschließlich einer Abdeckung (6), um die stromführenden Komponenten (1, 2, 3) des elektrischen Anschlusses (10) abzudecken.

12. Anschluss nach einem der Ansprüche 9 bis 11, wobei das Dichtmittel (6) oder die Abdeckung (6) ein Elastomermaterial ist, das auf die Oberseite elektrischen Anschlusses (10) geformt ist.

13. Gerät an sich nach einem vorherigen Anspruch, wobei das Gerät an sich ein schnurloses Gerät ist, das von der Strombasis abgenommen werden kann, wobei mindestens eine Steuerung für das schnurlose Gerät in der Strombasis untergebracht ist.

14. Gerät an sich nach einem vorherigen Anspruch, umfassend eines der Folgenden: eine Küchenmaschine, einen Mixer, einen Wasserkocher, eine Kaffeemaschine, eine Espresso-Maschine, einen Entsafter, eine Smoothie-Maschine, eine Brot-, Soßenmaschine, einen Dampfgarer und einen Milchaufschäumer.

## Revendications

1. Corps d'appareil électrique domestique possédant un composant de base (18, 42) comportant un connecteur sans fil étanche à l'eau de 360° distinct (10) scellé à celui-ci, ledit composant de base étant scellé contre une paroi latérale interne (30) d'une partie inférieure (32) du corps d'appareil de façon à rendre étanche à l'eau le corps d'appareil.

2. Corps d'appareil selon la revendication 1, ledit composant de base (18, 42) comprenant un moyen de drainage.

3. Corps d'appareil selon l'une quelconque des revendications précédentes, ledit connecteur électrique sans fil étanche à l'eau distinct (10) comprenant un moyen pour permettre à l'eau, qui autrement serait retenue dans ledit connecteur sans fil, d'être drainée.

4. Corps d'appareil selon l'une quelconque des revendications précédentes, ledit composant de base (18, 42) comprenant un rebord externe (20) retenant un joint d'étanchéité pour assurer l'étanchéité contre la paroi latérale interne (30).

5. Corps d'appareil selon l'une quelconque des revendications précédentes, une surface inférieure du connecteur (10) affleurant le fond du corps d'appareil.

6. Corps d'appareil selon l'une quelconque des revendications précédentes, comprenant en outre une protection de courant résiduel et/ou un capteur.

7. Corps d'appareil selon l'une quelconque des revendications précédentes, comprenant un moyen pour couvrir, s'ajuster à l'intérieur ou remplir le connecteur électrique (10) pour empêcher une infiltration d'eau durant le lavage.

8. Corps d'appareil selon l'une quelconque des revendications précédentes, ledit connecteur (10) comprenant une pluralité de composants porteurs de courant (1, 2, 3) destinés à alimenter en électricité le corps d'appareil, chacun desdits composants porteurs de courant (1, 2, 3) étant scellés ou incorporés dans le connecteur (10).

9. Corps d'appareil selon la revendication 8, chacun desdits composants porteurs de courant (1, 2, 3) étant au moins partiellement incorporé dans un produit d'étanchéité (6).

10. Corps d'appareil selon la revendication 8 ou 9, lesdits composants porteurs de courant (1, 2, 3) étant scellés dans le connecteur électrique (10) par moulage par insertion.

11. Corps d'appareil selon l'une quelconque des revendications 8 à 10, comprenant un couvercle (6) pour assurer l'étanchéité des composants porteurs de courant (1, 2, 3) du connecteur électrique (10).

12. Connecteur selon l'une quelconque des revendications 9 à 11, ledit produit d'étanchéité (6) ou ledit couvercle(6) étant un matériau élastomère moulé sur la partie supérieure du connecteur électrique (10).

13. Corps d'appareil selon l'une quelconque des revendications précédentes, ledit corps d'appareil étant un appareil sans fil détachable d'une base d'alimentation électrique, au moins une commande pour l'appareil sans fil étant logée dans la base de l'alimentation électrique.

14. Corps d'appareil selon l'une quelconque des revendications précédentes, comprenant l'un de : un robot culinaire, un mélangeur, une bouilloire, une cafetière, une machine à expresso, un presse-agrumes, une machine à boissons frappées aux fruits, une poêle, un saucier, un cuiseur à vapeur et un mousseur à lait.
